# EUROPEAN PATENT APPLICATION

(11) **EP 1 394 004 A1**
(43) Date of publication of application: **03.03.2004**
(21) Application number: 03018776.9
(22) Date of filing: 28.08.2003
(51) Int. Cl.: B60R 22/41

(54) **Webbing retractor**

(30) Priority: 29.08.2002 JP 2002250757
(71) Applicant: Kabushiki Kaisha Tokai-Rika-Denki-Seisakusho, Niwa-gun, Aichi-ken (JP)
(72) Inventor: Sumiyashiki, Akira, Ohguchi-cho Niwa-gun Aichi-ken (JP)
(74) Representative: Dreiss, Fuhlendorf, Steimle & Becker

(57) **Abstract**

In a webbing retractor, internal teeth, which engage with a pawl for a WSIR, are formed independently as a gear for a WSIR. External teeth are formed at an outer peripheral surface of the gear for a WSIR. There is another pawl which meshes with the external teeth. By utilizing a mechanism for switching between an ELR and an ALR, at a time when an entire amount of a webbing is taken-up, the pawl is moved apart from the external teeth against urging force of an urging device, such that the gear for a WSIR is held in a rotatable state. At other times, the pawl engages with the external teeth and fixedly holds the gear for a WSIR. When end locking arises, restraint of the gear for a WSIR is released, and the pawl immediately moves away from the internal teeth.

## Description

### BACKGROUND OF THE INVENTION

### Field of the Invention

The present invention relates to a webbing retractor which stops rotation of a take-up shaft in a webbing pull-out direction, which rotation is caused by sudden pulling-out of a webbing.

### Description of the Related Art

As locking mechanisms for webbing retractors which take-up, in the form of a roll, a webbing for restraining a vehicle occupant, there are a so-called WSIR (webbing sensitive inertia reel) and a VSIR (vehicle sensitive inertia reel) . A WSIR senses sudden pulling-out of a webbing, and impedes rotation of a spool (take-up shaft) in the webbing pull-out direction. A VSIR senses a state of rapid deceleration of the vehicle, and impedes rotation of the spool (take-up shaft) in the webbing pull-out direction.

An example of the former mechanism will be briefly described. Both axial direction end portions of the spool, to which the proximal end portion of the webbing is anchored, are supported so as to be freely rotatable at side portions of a frame which is formed in a substantial U shape as seen in plan view. A gear, which is made of resin and is called a V gear, is mounted, so as to be relatively rotatable, to one axial direction end portion of the spool. An inertia plate formed of resin is assembled with the V gear so as to be relatively rotatable. A lock plate, which is formed in a substantial U shape as seen in plan view, is accommodated at the spool so as to be movable in the radial direction.

The lock plate as well is disposed within the shaft diameter of the spool since relative rotation usually does not arise among the spool, the V gear and the inertia plate. When the webbing is suddenly pulled out from this state, the spool, at which the proximal end of the webbing is anchored, attempts to rotate in the webbing pull-out direction. On the other hand, the inertia plate attempts or remain in its place. Thus, relative rotation arises between the inertia plate and the spool. A pawl, which is attached to the V gear, is thereby pushed by the inertia plate, and engages with internal teeth which are formed in a resin cover which is called a sensor cover. As a result, a state arises in which rotation of the V gear in the webbing pull-out direction is impeded, and relative rotation arises between the V gear and the spool. When relative rotation arises between the V gear and the spool, the lock plate is guided by a guide hole formed in the V gear, and the lock plate moves toward the radial direction outer side of the spool. Lock teeth formed at the distal end portions thereof engage with internal ratchets formed in the both side portions of the frame. In this way, rotation of the spool in the webbing pull-out direction is impeded. Namely, a locked state arises.

In the case of the above-described WSIR, when a vehicle occupant removes a tongue plate from a buckle device and the webbing is taken-up onto the spool by urging force, rotation of the spool in the webbing take-up direction is stopped at the point in time when the entire amount of the webbing is taken-up. Conversely, the inertia plate assembled to the V gear attempts to rotate as is in the webbing take-up direction due to its own inertial force. Thus, relative rotation arises between the inertia plate and the spool, and the pawl may engage with the internal teeth in the resin cover. As a result, there is the possibility that the lock plate will be guided by the guide hole of the V gear and the lock teeth of the lock plate will engage with the internal ratchets of the frame such that a locked state arises, and a state in which the webbing cannot be pulled-out thereafter, so-called end lock, will arise.

### SUMMARY OF THE INVENTION

In view of the aforementioned, a webbing retractor which can suppress or prevent so-called end locking from occurring in a WSIR is desired.

The first aspect of the present invention is the following webbing retractor. This webbing retractor has a frame which is fixed to a vehicle body, and an inertia plate provided integrally and coaxially at an axial end side of a take-up shaft which is supported so as to be rotatable around an axis at the frame and which takes-up the webbing in layers by urging force. The webbing retractor has a pawl which is supported so as to be swingable, and engagement teeth which are fixedly supported at the frame. When a webbing for restraining a vehicle occupant is suddenly pulled-out, the inertia plate causes a rotation delay with respect to the take-up shaft, and swings the pawl and causes the pawl to engage with the engagement teeth. In this way, the inertia plate locks rotation of the take-up shaft in the webbing pull-out direction. Moreover, the engagement teeth are provided so as to be rotatable around an axis with respect to the frame. In addition, the webbing retractor has a holding device which, when a vehicle occupant cancels an applied state of the webbing and an entire amount of the webbing is taken-up onto the take-up shaft by urging force, holds the engagement teeth in a rotatable state, and which, at other times, holds the engagement teeth in a state in which rotation of the engagement teeth in the webbing pull-out direction is impeded.

The second aspect of the present invention is the following webbing retractor. This webbing retractor has a take-up shaft and a frame. The take-up shaft is a member which takes-up, in layers and by urging force, a webbing for restraining a vehicle occupant. The frame is a member which is fixed to a vehicle body and rotatably supports both end portions of the take-up shaft. Lock teeth are formed at a surface of the frame which surface intersects an end portion of the take-up shaft. The webbing retractor also has a lock plate and a lock wheel. The lock plate is provided at at least one end portion side of the take-up shaft. The lock plate is able to move between a position of engagement with the lock teeth and a position of non-engagement with the lock teeth. Further, the lock plate is a member which impedes rotation of the take-up shaft in a webbing pull-out direction by engaging with the lock teeth. The lock wheel is provided coaxially at one end portion side of the take-up shaft. The lock wheel is a member which usually rotates integrally with the take-up shaft and holds the lock plate at the position of non-engagement, and when relative rotation arises between the take-up shaft and the lock wheel, the lock wheel moves the lock plate to the position of engagement. The webbing retractor also has a pawl and an inertia plate. The pawl is a member which is swingably supported at the lock wheel, and is usually held at a non-swung position by urging force. The inertia plate is disposed coaxially to the lock wheel and is provided so as to be able to rotate relatively within a predetermined range. The inertia plate is a member which usually rotates integrally with the lock wheel, and when the webbing is suddenly pulled-out, the inertia plate causes a rotation delay with respect to the take-up shaft, and moves the pawl from the non-swung position to a swung position against urging force. The webbing retractor also has an engaging member and a holding device. The engaging member is disposed coaxially to the lock wheel and is provided so as to be able to rotate around an axis. Engagement teeth are formed at the engaging member at a peripheral surface side thereof opposing the pawl. The engagement teeth engage with the pawl and stop rotation of the lock wheel in the webbing pull-out direction due to the pawl moving to the swung position. When a vehicle occupant cancels an applied state of the webbing and an entire amount of the webbing is taken-up onto the take-up shaft by urging force, the holding device holds the engaging member in a rotatable state. At other times, the holding device holds the engaging member in a state in which rotation of the engaging member in the webbing pull-out direction is impeded.

In accordance with the webbing retractor of the first aspect of the present invention, when the webbing for restraining a vehicle occupant is suddenly pulled-out, the inertia plate, which is provided integrally and coaxially with an axial end side of the take-up shaft, causes a rotation delay with respect to the take-up shaft. Thus, the pawl, which is supported so as to be swingable, engages with the engagement teeth which are fixedly supported at the frame. In this way, rotation of the take-up shaft in the webbing pull-out direction is impeded, and a locked state arises.

Here, when the vehicle occupant cancels the state in which the webbing is applied to him/her and lets go of the webbing, the entire amount of the webbing is taken-up onto the take-up shaft by urging force. At this time, at the point in time when the take-up shaft takes-up the entire amount of the webbing, rotation of the take-up shaft in the webbing take-up direction stops. However, the inertia plate, which is disposed coaxially to the take-up shaft, attempts to rotate in the webbing take-up rotation direction even after the take-up shaft stops rotating in the webbing take-up direction. When this state proceeds, the inertia plate enters into a state which is effectively the same as that when the inertia plate causes a rotation delay with respect to the take-up shaft, and rotation of the take-up shaft in the webbing pull-out direction is locked. However, in the present invention, the engagement teeth are provided so as to be rotatable with respect to the frame. When the entire amount of the webbing is taken-up, the engagement teeth are held in an engageable state by the holding device. Accordingly, even if the pawl is pushed by the inertia plate and swings, the state in which the pawl engages with the engagement teeth is not maintained, and the engaged state is immediately cancelled. As a result, it is possible to suppress or deter the occurrence of end locking at the time when the state in which the entire amount of the webbing is taken-up arises.

Note that, at times other than when the entire amount of the webbing is taken-up, the engagement teeth are held by the holding device in a state in which rotation in the webbing pull -out direction is impeded. Accordingly, the function as a WSIR is ensured.

In accordance with the webbing retractor of the second aspect, usually, the inertia plate rotates integrally with the lock wheel, and the pawl is held at the non-swung position. Thus, rotation of the lock wheel in the webbing pull-out direction is not impeded. Therefore, the lock wheel rotates integrally with the take-up shaft, and relative rotation between the two does not arise. Accordingly, the lock plate is held by the lock wheel at a position separated from the lock teeth of the frame, i.e., at a position of non-engagement. Accordingly, in this state, pulling-out of the webbing from the take-up shaft and taking-up of the webbing onto the take-up shaft are carried out freely.

When the webbing is suddenly pulled-out, the take-up shaft attempts to rotate suddenly in the webbing pull-out rotation direction, whereas the inertia plate attempts to stay at its position. Therefore, a rotation delay arises at the inertia plate. In this way, the pawl is moved (swung) from the non-swung position to the swung position by the inertia plate. The pawl is engaged with the engagement teeth of the engaging member which is in the state in which rotation thereof in the webbing pull-out direction is impeded by the holding device. Thus, rotation of the lock wheel in the webbing pull-out direction is stopped, and relative rotation arises between the lock wheel and the take-up shaft. As a result, the lock plate engages with the lock teeth of the frame. In this way, rotation of the take-up shaft in the webbing pull-out direction is impeded, and a locked state arises.

Here, when the vehicle occupant cancels the state in which the webbing is applied to him/her and lets go of the webbing, the entire amount of the webbing is taken-up onto the take-up shaft by urging force. At this time, at the point in time when the take-up shaft takes-up the entire amount of the webbing, rotation of the take-up shaft in the webbing take-up direction stops. However, the inertia plate, which is disposed coaxially to the lock wheel, is provided so as to be able to rotate relatively within a predetermined range. Thus, the inertia plate attempts to rotate in the webbing take-up rotation direction even after the take-up shaft stops rotating in the webbing take-up direction. When this state proceeds, the pawl is moved (swung) by the inertia plate from the non-swung position to the swung position, the pawl engages with the engagement teeth of the engaging member, relative rotation arises between the take-up shaft and the lock wheel, and a locked state arises. However, in the present invention, at the time of this state, the engaging member is held in a rotatable state by the holding device. Therefore, even if the pawl engages with the engagement teeth of the engaging member, the engaging member rotates in the direction of application of the load inputted from the pawl. The state in which the pawl is engaged with the engagement teeth is not maintained, and the engaged state is cancelled immediately. As a result, it is possible to suppress or deter the occurrence of end locking at the time when the state in which the entire amount of the webbing is taken-up arises.

### BRIEF DESCRIPTION OF THE DRAWINGS

Fig. 1 is a schematic sectional view showing the overall structure of a webbing retractor relating to an embodiment of the present invention.
Fig. 2 is a perspective view showing a spool and a lock plate shown in Fig. 1, with the spool and the lock plate separated from one another.
Fig. 3 is a side view showing a W sensor (in a non-operating state) and a V sensor of the webbing retractor relating to the embodiment of the present invention.
Fig. 4 is a side view showing the W sensor (in an operating state) and the V sensor of the webbing retractor relating to the embodiment of the present invention.
Fig. 5 is a side view showing a locking mechanism (in a non-operating state) of the webbing retractor relating to the embodiment of the present invention.
Fig. 6 is a side view showing the locking mechanism (in an operating state) of the webbing retractor relating to the embodiment of the present invention.
Fig. 7 is a side view showing a switching mechanism for switching between an ELR and an ALR of the webbing retractor relating to the present embodiment (a state in which the ALR does not operate in a state in which the ELR does not operate).
Fig. 8 is a side view showing the switching mechanism for switching between the ELR and the ALR of the webbing retractor relating to the present embodiment (a state in which the ALR does not operate in a state in which the ELR operates).
Fig. 9 is a side view showing the switching mechanism for switching between the ELR and the ALR of the webbing retractor relating to the present embodiment (a state in which the ALR operates in a state in which the ELR does not operate).
Fig. 10 is a side view showing the state of a pawl relating to main portions of the present embodiment (at a usual time in a locked state), in relation to the switching mechanism for switching between the ELR and the ALR in the webbing retractor relating to the present embodiment.
Fig. 11 is a side view showing the state of the pawl relating to main portions of the present embodiment (when the webbing is suddenly pulled-out in the locked state), in relation to the switching mechanism for switching between the ELR and the ALR in the webbing retractor relating to the present embodiment.
Fig. 12 is a side view showing the state of the pawl relating to main portions of the present embodiment (when the entire amount of the webbing is taken-up in an unlocked state), in relation to the switching mechanism for switching between the ELR and the ALR in the webbing retractor relating to the present embodiment.

### DETAILED DESCRIPTION OF THE INVENTION

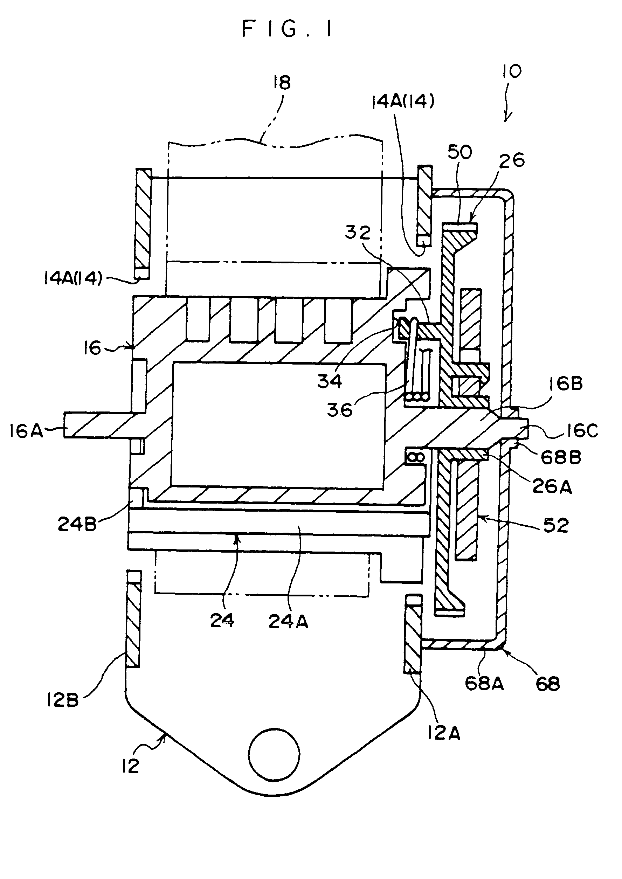

Hereinafter, a webbing retractor 10 relating to an embodiment of the present invention will be described with reference to Figs. 1 through 12.

### Overall Structure of Webbing Retractor 10

First, the overall structure of the webbing retractor 10 relating to the present embodiment will be described. Thereafter, main portions of the webbing retractor 10 will be described.

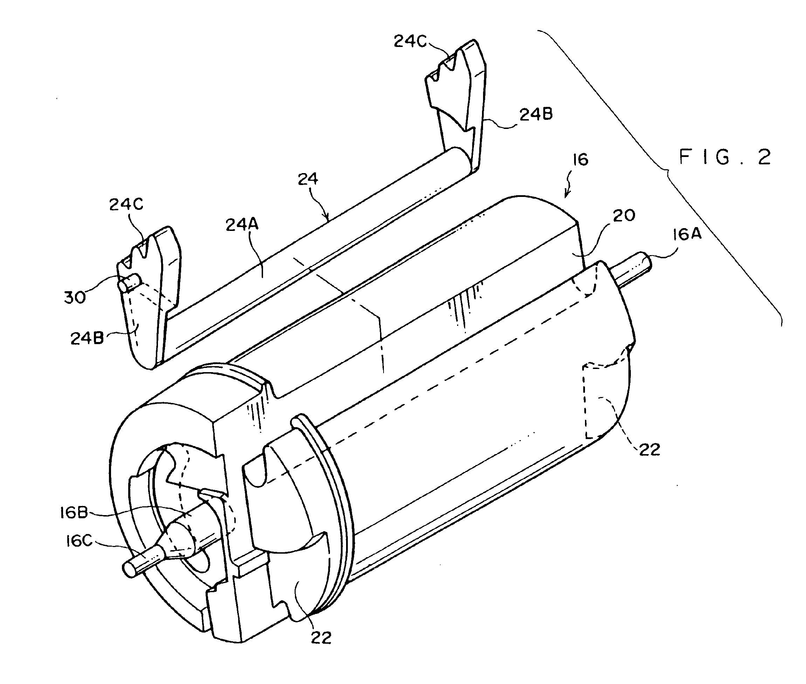

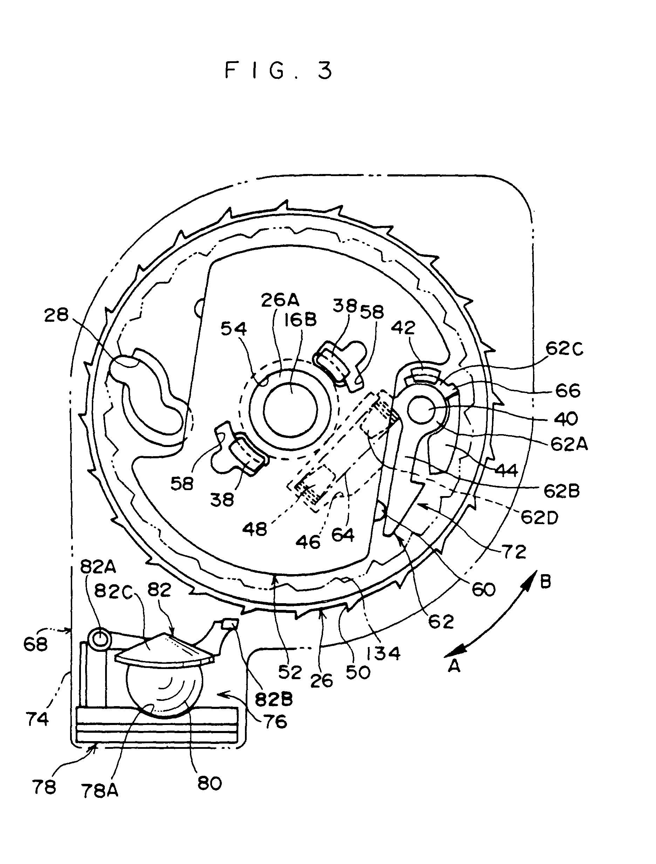

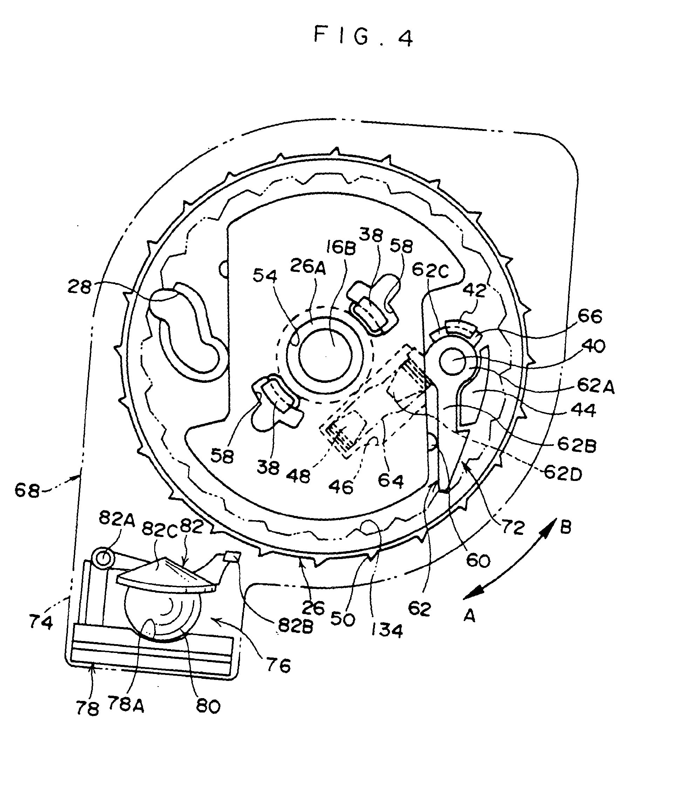

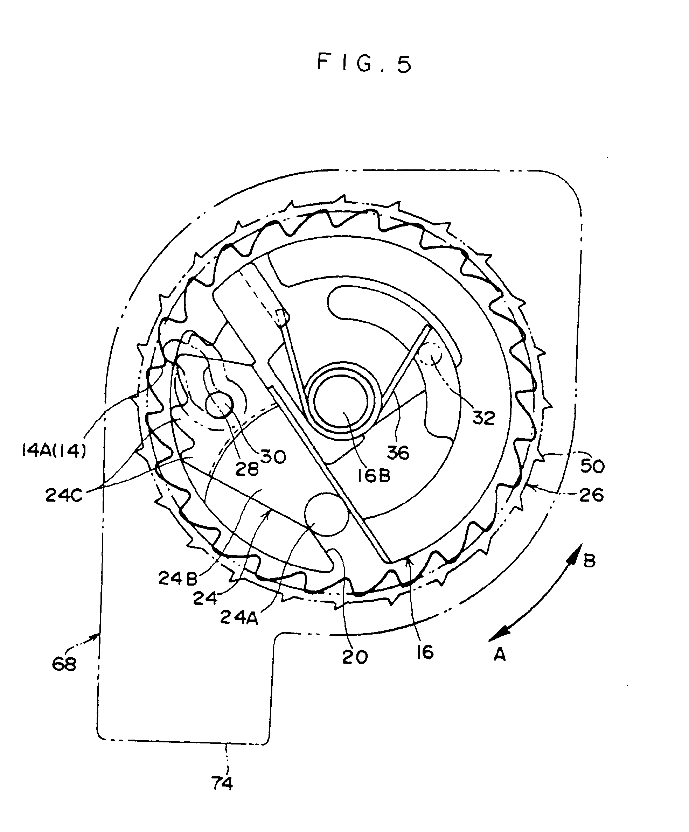

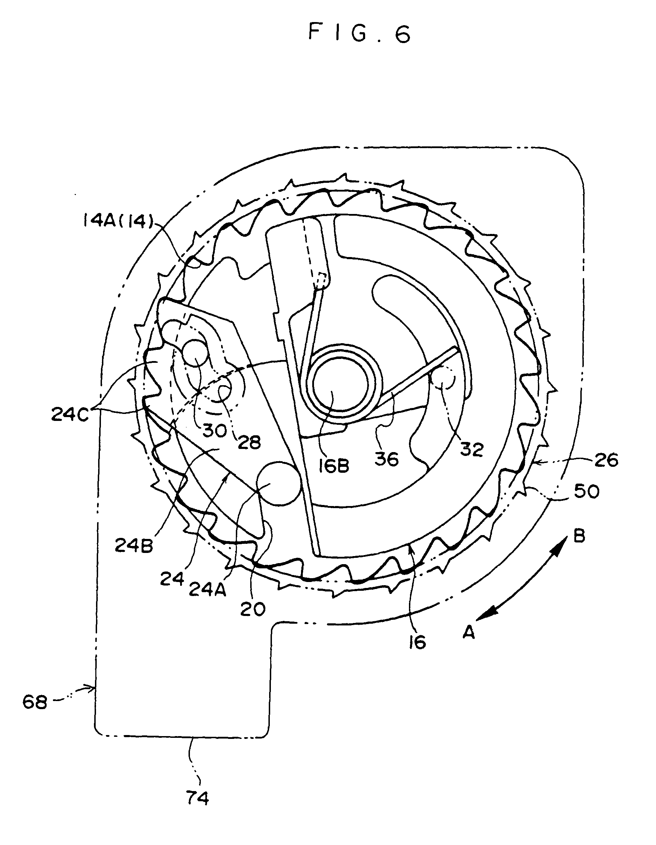

A cross-sectional view of the overall structure of the webbing retractor 10 relating to the present embodiment is shown in Fig. 1. A perspective view, in which a spool and a lock plate are separated, is shown in Fig. 2. States before and after operation of a W sensor of a WSIR are shown in side views in Figs. 3 and 4. States before and after locking by the lock plate are shown in side views in Figs. 5 and 6. Note that direction A marked for convenience in Figs. 2 through 6 denotes the webbing pull-out rotation direction, whereas direction B denotes the webbing take-up rotation direction.

As shown in Fig. 1, the webbing retractor 10 has a frame 12 which is formed of metal and which is substantially U shaped in plan view. The frame 12 is fixed by bolts to the lower end portion of a side portion of the vehicle body. Internal ratchets 14, which are very strong and serve as lock teeth, are formed coaxially by punching in side portions 12A, 12B of the frame 12.

A spool 16, which is cylindrical and serves as a take-up shaft, is pivotally supported at the side portions 12A, 12B of the frame 12. A rotating shaft 16A is formed integrally with one axial direction end portion of the spool 16 at the axially central portion of the spool 16. The inner end of an unillustrated power spring is anchored on the rotating shaft 16A. The power spring is an element, which can be interpreted in the broader sense as an urging mechanism. In this way, the spool 16 is usually urged to rotate in the webbing take-up rotation direction (direction B). A rotating shaft 16B is formed integrally at the other axial direction end portion of the spool 16, so as to be coaxial with the rotating shaft 16A. A small diameter shaft 16C is formed integrally and coaxially at the distal end of the rotating shaft 16B. The spool 16 is freely rotatably supported, at this small diameter shaft 16C, by a shaft receiving portion 68B which is formed at a sensor holder 68 which will be described later. The proximal end portion of a webbing 18 for restraining a vehicle occupant is anchored to the spool 16. The webbing 18 is freely taken-up and pulled-out due to the spool 16 rotating.

As shown in Fig. 2, a cut-out 20 is formed along the axial direction in the outer peripheral portion of the spool 16. The cut-out 20 is formed along the axial direction along the entire length of the spool 16, except for at the rotating shafts 16A, 16B and the small diameter shaft 16C. The floor portion of the cut-out 20 is formed in the shape of a semicircular-shaped surface. Concave portions 22 are formed at the axial direction end portions of the spool 16.

A lock plate 24, which is substantially U shaped as seen in plan view, is accommodated in the cut-out 20 and the concave portions 22 of the spool 16. The lock plate 24 is structured by a connecting shaft 24A which is shaped as a rod, and a pair of plates 24B which are formed integrally at the axial direction end portions of the connecting shaft 24A and extend parallel to one another outwardly in the radial direction. The connecting shaft 24A of the lock plate 24 is accommodated at the floor portion of the cut-out 20 of the spool 16, so as to be able to rotate around the axis. The pair of plates 24B are accommodated or housed in the pair of concave portions 22 which are formed at the axial direction end portions of the spool 16. Lock teeth 24C, which can engage with ratchet teeth 14A of the aforementioned internal ratchets 14, are formed at the distal end portions of the plates 24B.

In the state in which the pair of plates 24B are completely accommodated within the pair of concave portions 22, the lock teeth 24C are held at positions of being separated from the ratchet teeth 14A. This position is the non-engaged position of the lock plate 24 (see Fig. 5). Due to the connecting shaft 24A of the lock plate 24 swinging around the floor portion of the cut-out 20 and the pair of plates 24B coming out from the pair of concave portions 22, the lock teeth 24C are engaged with the ratchet teeth 14A. This position is the engaged position of the lock plate 24 (see Fig. 6).

As shown in Figs. 1, 3, and 4, a V gear 26 serving as a lock wheel is disposed at the outer side of the one side portion 12A of the frame 12. The V gear 26 is made of resin, and is substantially formed in the shape of a disc having a larger diameter than the outer diameter of the end portion of the spool 16. A cylindrical boss 26A, which has a pair of resin claws at the inner peripheral surface thereof, is formed at the axially central portion of the V gear 26. Due to the rotating shaft 16B of the spool 16 being inserted into the boss 26A, the V gear 26 is mounted, coaxially and freely rotatably, to one axial direction end portion of the spool 16.

A substantially backward S shaped guide hole 28 is formed at a predetermined position at the outer peripheral side of the V gear 26. A guide pin 30 (see Figs. 5 and 6), which stands erect at one of the plates 24B of the lock plate 24, is inserted in the guide hole 28. In this way, the V gear 26 can rotate, within a predetermined range of angles of rotation, relative to the spool 16. At the time when relative rotation between the V gear 26 and the spool 16 arises, the guide hole 28 moves the guide pin 30 from the inner side toward the outer side, and guides the lock teeth 24C of the lock plate 24 to positions at which they can engage with the ratchet teeth 14A of the internal ratchets 14 of the frame 12.

A supporting projection 32 (see Figs. 1, 5 and 6) stands erect at the spool 16 side surface of the V gear 26, so as to be directed in the direction opposite the boss 26A. The distal end portion of the supporting projection 32 is inserted in a concave portion 34 formed in one axial direction end portion of the spool 16. In this state, one end portion of a torsion coil spring 36 is anchored on the supporting projection 32. The spring 36 is an element which can be interpreted in the broader sense as an urging mechanism. Note that the coil portion of the torsion coil spring 36 is disposed in a state of being wound on the rotating shaft 16B of the spool 16, and the other end portion of the torsion coil spring 36 is anchored on one axial direction end portion of the spool 16. In this way, usually, the V gear 26 rotates following rotation of the spool 16.

A pair of anchor portions 38 stand erect, parallel to the boss 26A, at the periphery of the boss 26A of the V gear 26. The anchor portions 38 are formed, as seen in plan view, in arc shapes which are coaxial with the boss 26A, and are formed at two places which are symmetrical with the boss 26A therebetween. A pawl shaft 40, which is shaped as a solid cylinder having a small diameter, stands erect at that same side surface of the V gear 26. The pawl shaft 40 is formed at a position which is substantially symmetrical to the aforementioned guide hole 28 with the boss 26A therebetween, and is a portion which is the supporting shaft of a pawl 62 which will be described later.

As shown in Figs. 3 and 4, a pawl anchor portion 42 is formed integrally in the vicinity of the pawl shaft 40. The pawl anchor portion 42 is formed in the shape of an arc which is concentric with the pawl shaft 40 as seen in side view, and a resin claw is formed at the distal end portion of the pawl anchor portion 42. A pawl stopper 44, which corresponds to the configuration of the pawl 62 which will be described later, is formed integrally in a vicinity of the pawl shaft 40. Moreover, a spring hole 46, which is shaped as an elongated hole, is formed in the V gear 26 in a vicinity of the pawl shaft 40. A spring receiving portion 48, which is substantially shaped as a solid cylindrical projection, is formed integrally at one end portion of the spring hole 46.

External teeth 50 are formed integrally at the outer peripheral portion of the V gear 26. An engaging portion 82B of a sensor lever 82 of a V sensor 76, which will be described later, can engage with the external teeth 50.

As shown in Figs. 1, 3 and 4, an inertia plate 52 (first inertia member) formed of resin is disposed coaxially at the outer side of the V gear 26. The inertia plate 52 is substantially shaped as a disc whose outer periphery is cut-out at two places. A pivotally supporting hole (circular hole) 54 is formed at the axially central portion of the inertia plate 52. A pair of arc-shaped anchor holes 58 are formed at the outer side of the pivotally supporting hole 54 at opposing positions in the radial direction. The boss 26A of the V gear 26 is inserted in the pivotally supporting hole 54, and the pair of anchor portions 38 of the V gear 26 are inserted in the pair of anchor holes 58. In this way, the pair of anchor portions 38 are elastically anchored, and the inertia plate 52 is mounted coaxially and integrally to the V gear 26. Moreover, the peripheral direction lengths (the lengths of the arcs) of the anchor holes 58 are set to be longer than the peripheral direction lengths (the lengths of the arcs) of the anchor portions 38. In the state after assembly, the inertia plate 52 can rotate relative to the V gear 26 in the webbing take-up rotation direction (i.e., direction B) within the range of the difference in the lengths of the arcs (the angle of circumference). Moreover, linear engagement projections 60 are formed integrally with the cut-out side end surfaces of the inertia plate 52.

The pawl 62 is swingably supported at the pawl shaft 40 of the V gear 26. The pawl 62 is structured by a shaft-supported portion 62A, an arm portion 62B, an anchor piece 62C, and a spring receiving portion 62D. The shaft-supported portion 62A is cylindrical, and is pivotally supported at the pawl shaft 40. The arm portion 62B extends from the shaft-supported portion 62A, and a claw is formed at the distal end side surface of the arm portion 62B. The anchor piece 62C is formed at the outer periphery of the lower portion of the shaft-supported portion 62A. The spring receiving portion 62D extends from the shaft-supported side of the lower edge of the arm portion 62B.

In the state in which the pawl shaft 40 is inserted in the shaft-supported portion 62A, the anchor piece 62C is anchored at the pawl anchor portion 38 of the V gear 26, such that the pawl 62 cannot be pulled-off in the axial direction. One end portion of a compression coil spring 64, which can be interpreted in the broader sense as an urging mechanism, is anchored on the spring receiving portion 62D by the spring receiving portion 62D being inserted therethrough. The other end portion of the compression coil spring 64 is anchored on the spring receiving portion 48 of the V gear 26 by the spring receiving portion 48 being inserted therethrough. The compression coil spring 64 is accommodated, in a compressed state, in the spring hole 46 formed in the V gear 26. Accordingly, the compression coil spring 64 urges the pawl 62 to rotate clockwise around the pawl shaft 40. Moreover, a small projection 66, which can abut the aforementioned pawl stopper 44 which is formed at the V gear 26, is formed integrally at the anchor piece 62C end portion of the pawl 62. The small projection 66 is a stopper at the time when the pawl 62 rotates clockwise around the pawl shaft 40 due to the urging force of the compression coil spring 64. In this way, the pawl 62 usually rotates integrally with the V gear 26 without swinging (i.e., revolves around the rotating shaft 16B).

When the pawl 62 rotates counterclockwise around the pawl shaft 40 against the urging force of the compression coil spring 64, the arm portion 62B abuts the side surface of the pawl stopper 44, such that further swinging is impeded. In this way, the range over which the pawl 62 can swing (the angle of rotation of the pawl 62) is restricted.

The sensor holder 68, which is made of resin and is formed in the shape of a flat cup, is attached to the outer side of the one side portion 12A of the frame 12. A gear 132 for the WSIR, which will be described later, is disposed at the inner side of the sensor holder 68. In the state in which the sensor holder 68 is assembled, the distal end portion of the arm portion 62B of the pawl 62 opposes internal teeth 134 which serve as "engagement teeth" and which are formed at the inner peripheral surface of the gear 132 for the WSIR. In a case in which the pawl 62 is swung by the inertia plate 52 around the pawl shaft 40 against the urging force of the compression coil spring 64 at the time when the webbing 18 is suddenly pulled-out, the distal end portion of the arm portion 62B of the pawl 62 engages with the internal tooth 134.

In the above-described structure, the inertia plate 52, the pawl 62, the compression coil spring 64, and the internal teeth 134 of the gear 132 for the WSIR form a W sensor 72 which structures a WSIR.

A holder portion 74, which is hollow and substantially parallelepiped, is formed integrally at the upper end portion of the outer periphery of the sensor holder 68. The V sensor (i.e., an acceleration sensor) 76 is accommodated in the holder portion 74. Note that the V sensor 76 is not shown in Fig. 1.

As shown in Figs. 3 and 4, the V sensor 76 has a housing 78. The housing 78 is formed in a substantial L shape as seen in side view. A rolling surface 78A, which is shaped as a concave surface, is formed at the center of the floor portion of the housing 78. The housing 78 is attached to the holder portion 74 from the side. A ball 80 is placed on the rolling surface 78A. The sensor lever 82 is swingably supported at the upper end portion of the housing 78. The sensor lever 82 has a supported shaft 82A which is pivotally supported at the upper end portion of the housing 78; an engaging portion 82B which is formed in a substantial L shape as seen in plan view, and, in an assembled state, the end portion of the engaging portion 82B, which end portion is disposed substantially parallel to the supported shaft 82A, can engage with the external teeth 50 of the V gear 26; and an abutment portion 82C which is dish-shaped and connects the supported shaft 82A and the engaging portion 82B. The abutment portion 82C rests on the ball 80 due to its own weight, and in this state, the engaging portion 82B is held at a position of non-engagement at which the engaging portion 82B is set apart from the external teeth 50 of the V gear 26. Due to the ball 80 rolling on the rolling surface 78A when rapid deceleration of the vehicle arises, the sensor lever 82 swings around the supported shaft 82A. In this way, the engaging portion 82B engages with the external tooth 50 of the V gear 26.

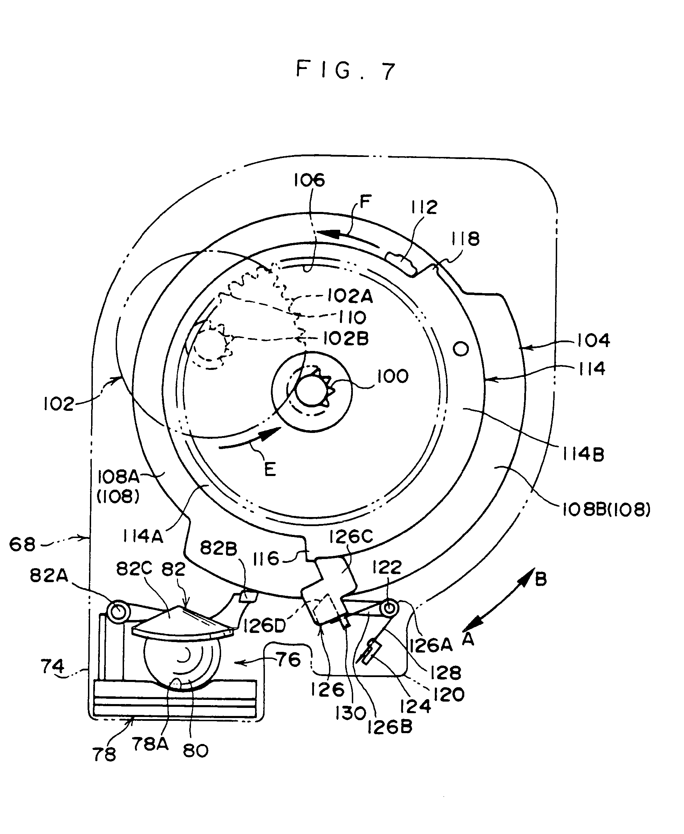

Next, the switching mechanism for switching between the ELR (emergency locking retractor) and the ALR (automatic locking retractor) will be described by using Figs. 7 through 9.

The fact that the small diameter shaft 16C is formed coaxially at the rotating shaft 16B of the spool 16 is the same as described above. However, this small diameter shaft 16C is formed in the shape of a square column. A pinion 100 made of resin is fit on (fit together with) this portion in a state in which relative rotation therebetween is impossible. No gear is formed at the outer peripheral surface of the root portion of the pinion 100, and the outer peripheral surface of the root portion of the pinion 100 is formed as a smooth peripheral surface. Due to this portion being pivotally supported by the shaft receiving portion 68B of the sensor holder 68, one end portion of the spool 16 is supported so as to be freely rotatable at the shaft receiving portion 68B of the sensor holder 68.

A pin (not illustrated) stands erect at the radial direction outer side of the shaft receiving portion 68B of the sensor holder 68. A two-stage gear 102, which is formed of resin and at which a large diameter gear 102A and a small diameter gear 102B are formed coaxially and integrally, is supported so as to be freely rotatable at this pin. In the state in which the sensor holder 68 is attached to the side portion 12A of the frame 12, the large diameter gear 102A meshes with the pinion 100 which is disposed in a state of passing through the axially central portion of the sensor holder 68. Accordingly, rotation of the spool 16 is decelerated during the course of being inputted from the pinion 100 to the large diameter gear 102A.

A first cam plate 104, which is substantially disc shaped, is fit with play at the outer side surface of the sensor holder 68. A shaft supporting hole (not illustrated), which is circular and in which the shaft supporting portion 68B of the sensor holder 68 is inserted, is formed in the axially central portion of the first cam plate 104. An annular portion 106, at whose reverse surface an annular groove is formed, is formed integrally at the outer peripheral side of the shaft supporting hole. A cam portion 108, which is formed as a ring-shaped plate, is formed integrally with the outer peripheral side of the annular portion 106. The small diameter gear 102B of the two-stage gear 102 is disposed in the groove of the annular portion 106 in a state of being inserted therein. Moreover, an inner peripheral gear 110 is formed at the inner peripheral surface of the outer side forming the groove of the annular portion 106. This inner peripheral gear 110 meshes with the small diameter gear 102B. Accordingly, when the pinion 100 rotates around the axis thereof, the inner peripheral gear 110 rotates via the large diameter gear 102A and the small diameter gear 102B, and the first cam plate 104 rotates in a decelerated manner in the direction opposite to the direction of rotation of the spool 16 (the pinion 100).

The cam portion 108, which is formed as a ring-shaped plate at the first cam plate 104, extends outwardly in the radial direction along substantially one-half of the circumference. Accordingly, a small diameter portion 108A and a large diameter portion 108B are provided at the cam portion 108. A switching projection 112, whose longitudinal direction is the circumferential direction, is formed integrally at a predetermined position in the circumferential direction at the small diameter portion 108A of the cam portion 108.

A second cam plate 114, which is substantially disc shaped and which has a smaller diameter than the first cam plate 104, is fit-on coaxially at the outer side of the first cam plate 104. A boss (not illustrated), which projects toward the first cam plate 104, is formed at the reverse surface side of the axially central portion of the second cam plate 114. Due to the second cam plate 114 being fit on the first cam plate 104 coaxially, the second cam plate 114 is elastically anchored to the distal end portion of the shaft receiving portion 68B of the sensor holder 68. The second cam plate 114 is formed in substantially the same configuration as the first cam plate 104, and a small diameter portion 114A and a large diameter portion 114B are formed along substantially half of the circumference, respectively. Accordingly, a pair of steps are formed at the border portions between the small diameter portion 114A and the large diameter portion 114B. In this way, a first engaging projection 116 and a second engaging projection 118 are formed at the both circumferential direction end portions of the large diameter portion 114B. The switching projection 112, which is formed at the small diameter portion 108A of the above-described first cam plate 104, is positioned on the locus of rotation of the first engaging projection 116 and the second engaging projection 118.

A lever supporting portion 120 is formed integrally at the lower end portion of the sensor holder 68 at a position at the side opposite the holder portion 74 in which the V sensor 76 is assembled. A supporting shaft 122 stands erect integrally at the upper end side of the lever supporting portion 120. A spring anchor portion 124 stands erect integrally at the lower end side of the lever supporting portion 120. An ALR lever 126 formed of resin is swingably supported at the supporting shaft 122. The ALR lever 126 is formed to include a shaft portion 126A which is cylindrical and through which the supporting shaft 122 is inserted; an arm portion 126B extending toward the radial direction outer side from the shaft portion 126A; an interfering portion 126C which is substantially step-shaped and which is formed at the distal end of the arm portion 126B; and a claw portion 126D which extends in the shape of a rod toward the inner side of the sensor holder 68 from the reverse surface side of the interfering portion 126C, and at whose inner end a claw, which can engage with the external teeth 50 of the V gear 26, is formed.

The coil portion of a torsion coil spring 128, which can be interpreted in the broader sensor as an "urging device", is wound on the shaft portion 126A of the ALR lever 126. One end portion of the torsion coil spring 128 is anchored on an anchor projection 130 formed at the reverse surface side of the interfering portion 126C, and the other end portion of the torsion coil spring 128 is anchored on the spring anchor portion 124 of the sensor holder 68. Accordingly, the torsion coil spring 128 urges the interfering portion 126C of the ALR lever 126 to rotate toward the outer peripheral surface side of the second cam plate 114 around the supporting shaft 122.

### Structure of Main Portions of Webbing Retractor 10

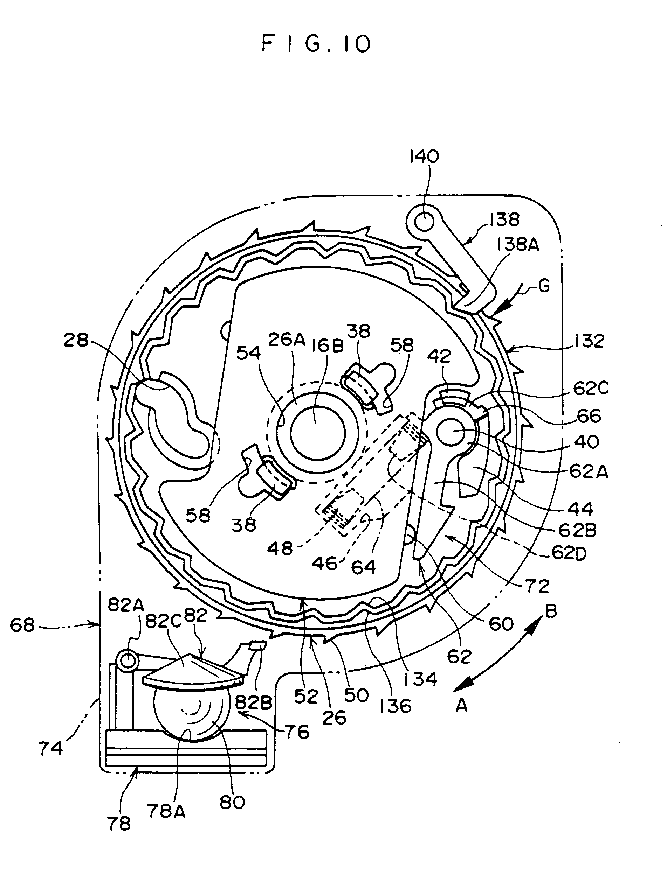

Next, main portions of the webbing retractor 10 relating to the present embodiment will be described by using Figs. 10 through 12. As shown in these figures, the gear 132 for the WSIR, which gear 132 serves as an "engaging member", is disposed at the outer peripheral side of the above-described inertia plate 52. The gear 132 for the WSIR is not formed integrally with the sensor holder 68, but rather is rotatably disposed separately and independently of the sensor holder 68 at the inner side of the sensor holder 68. Internal teeth 134, which serve as "engagement teeth" and with which the distal end portion of the arm portion 62B of the above-described pawl 62 can engage, are formed at the inner peripheral surface of the gear 132 for the WSIR. Further, external teeth 136, which structure a portion of a "holding device", are formed at the outer peripheral surface of the gear 132 for the WSIR. Namely, the gear 132 for the WSIR is a member at which gears are formed at the inner and outer peripheral surfaces thereof.

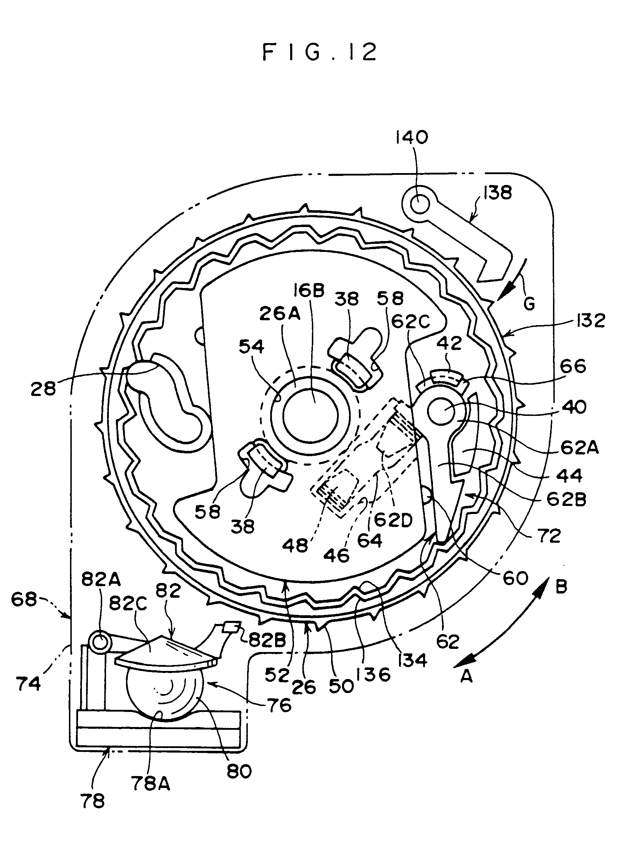

Another pawl 138, which serves as a "holding device" and at whose distal end portion a claw portion 138A is formed, is supported so as to be swingable around a supporting shaft 140 at the outer side of the gear 132 for the WSIR. The pawl 138 is urged by the urging force of an unillustrated urging device such as a torsion coil spring or the like, around the supporting shaft 140 in the direction of engaging with the external teeth 136 (the direction of arrow G). Accordingly, usually, due to the urging force of the urging device, the claw portion 138A of the pawl 138 engages with the external tooth 136 of the gear 132 for the WSIR and holds the gear 132 for the WSIR in a state in which rotation of the gear 132 for the WSIR in the webbing pull-out direction is impeded (the state shown in Fig. 10). At the time when the state in which the entire amount of the webbing 18 is taken-up arises, the pawl 138 swings against the urging force of the urging device, in the direction of moving away from the external teeth 136 of the gear 132 for the WSIR (the direction opposite to the direction of arrow G), and a state in which rotation of the gear 132 for the WSIR is possible (the state shown in Fig. 12) arises.

Control of the operation of the pawl 138 can be realized by using the above-described mechanism for switching between the ELR and the ALR. To explain one example, a pin, which functions as a portion of the "holding device", is made to stand erect in advance at the distal end side surface of the pawl 138. In correspondence therewith, an inclined wall, which similarly functions as a portion of the "holding device", is formed in advance at a predetermined position of the large diameter portion 108B of the first cam plate 104 (a position at which the inclined wall can interfere with the pin when the webbing 18 is in a state in which the entire amount thereof is taken-up). It suffices to provide a structure such that the following occurs: due to the vehicle occupant canceling the application of the webbing to himself/herself, the first cam plate 104 rotates in the webbing pull-out rotation direction, and near to the state in which the entire amount of the webbing 18 is taken-up, the inclined wall provided at the large diameter portion 108B of the first cam plate 104 abuts the pin, and forcibly pushes the pin in the direction opposite to the direction of arrow G against the urging force of the urging device. This control of the operation can be carried out in the relationship with the second cam plate 114.

Next, operation of the present embodiment will be described.

In the webbing retractor 10, usually, the pawl 62 of the W sensor 72 is urged to rotate clockwise around the pawl shaft 40 by the urging force of the compression coil spring 64, and the sensor lever 82 of the V sensor 76 is held on the ball 80 due to its own weight. Thus, the W sensor 72 and the V sensor 76 do not operate. Therefore, in the state in which the spool 16 accommodates the lock plate 24, the spool 16 can rotate freely in both the webbing pull-out rotation direction and the webbing take-up rotation direction.

When the webbing 18 is suddenly pulled-out or a state of rapid deceleration of the vehicle arises, the W sensor 72 or the V sensor 76 operates. Hereinafter, operation of the respective portions will be summarized in this order.

### Case in which the W Sensor 72 Operates

When the webbing 18 is suddenly pulled-out, the spool 16 and the V gear 26 are rotated at high speed in the webbing pull-out rotation direction (direction A). At this time, the inertia plate 52 cannot follow the V gear 26. Thus, an inertial delay arises at the inertia plate 52 against the urging force of the compression coil spring 64, and the inertia plate 52 rotates in the webbing take-up rotation direction B relative to the V gear 26. When the inertia plate 52 rotates in direction B relative to the V gear 26, the pawl 62, which the engaging projection 60 of the inertia plate 52 abuts (engages), is pushed and swung in direction B and engages the internal tooth 70A of the sensor holder 68, such that rotation of the V gear 26 in direction A is impeded (the state shown in Fig. 4).

When rotation of the V gear 26 in direction A is impeded, subsequently, relative rotation arises between the V gear 26 and the spool 16 to which the webbing tensile force is being applied. The guide pin 30 (see Figs. 2 and 5) is guided to the outer end side of the guide hole 28 of the V gear 26. In this way, the lock teeth 24C of the lock plate 24 are guided to positions at which they can engage with the ratchet teeth 14A of the internal ratchets 14, such that a lock standby state, i.e., a state in which the addendum of the lock teeth 24C engage with the addendum of the ratchet teeth 14A of the internal ratchets 14, arises.

When the addendum of the claws of the pair of lock teeth 24C of the lock plate 24 are guided to positions at which they can engage with the addendum of the ratchet teeth 14A of the pair of internal ratchets 14, as the spool 16 rotates further in direction A, the addendum of the lock teeth 24C are guided by the ratchet teeth 14A and reach the teeth bottoms of the ratchet teeth 14A. In this way, the lock plate 24 is reliably locked by the internal ratchets 14, and rotation of the spool 16 in the webbing pull-out rotation direction (direction A) is impeded, and further pulling-out of the webbing 18 is limited. Namely, after the lock teeth 24C are guided to positions at which they can engage with the internal ratchets 14, the spool 16 (the lock plate 24) is self-locked.

When, after the impeding of the pulling-out of the webbing 18, the tension applied to the webbing 18 decreases and the spool 16 is rotated by a predetermined angle in the webbing take-up rotation direction (direction B) (i.e., when a predetermined amount of the webbing 18 is taken-up), the engaged state of the lock plate 24 and the internal ratchets 14 is cancelled. Namely, when the spool 16 is rotated in direction B, due to the lock plate 24 being pushed at the connecting shaft 24A by the cut-out 20 of the spool 16, the lock teeth 24C are made to move away from the respective internal ratchets 14, and are, together with the V gear 26, returned to their initial positions due to the urging force of the torsion coil spring 36. Note that the taking-up of the webbing 18 after the tension applied to the webbing 18 decreases is achieved by the unillustrated power spring which is connected to the rotating shaft 16A of the spool 16.

### Case in which the V Sensor 76 Operates

When a state of rapid deceleration of the vehicle arises, due to the inertial force accompanying the rapid deceleration, the ball 80 of the V sensor 76 rolls on the rolling surface 78A of the housing 78. The abutment portion 82C of the sensor lever 82, which abuts and rests on the ball 80, swings upward. Thus, the engaging portion 82B, which is positioned at the side of the support shaft 82A opposite the side at which the abutment portion 82C is provided, swings downward, and engages with the external tooth 50 of the V gear 26. In this way, rotation of the V gear 26 in the webbing pull-out rotation direction is impeded. Therefore, relative rotation arises between the V gear 26 and the spool 16. The operation thereafter is similar to that of the above-described case of the W sensor 72, and will therefore be omitted.

### Switching Between the ELR and the ALR

Next, the operation of switching between the ELR and the ALR will be described. The state shown in Fig. 7 is the state in which the entire amount of the webbing 18 is taken-up. In this state, the outer peripheral edge of the large diameter portion 108B of the first cam plate 104 is positioned directly above the engaging portion 82B of the sensor lever 82 forming the V sensor 76. Therefore, the sensor lever 82 cannot swing. Namely, the ELR is in a non-operating state. At this time, the second cam plate 114 is positioned at the illustrated position with respect to the first cam plate 104. Thus, the interfering portion 126C of the ALR lever 126 is in a state of riding on the first engaging projection 116 against the urging force of the torsion coil spring 128. Accordingly, the claw portion 126D, which is at the reverse surface side of the first engaging projection 116, does not engage with the external teeth 50 of the V gear 26. Accordingly, rotation of the spool 16 in the webbing pull-out direction is possible, and the vehicle occupant can pull-out the webbing 18 in order to apply the webbing 18 to himself/herself.

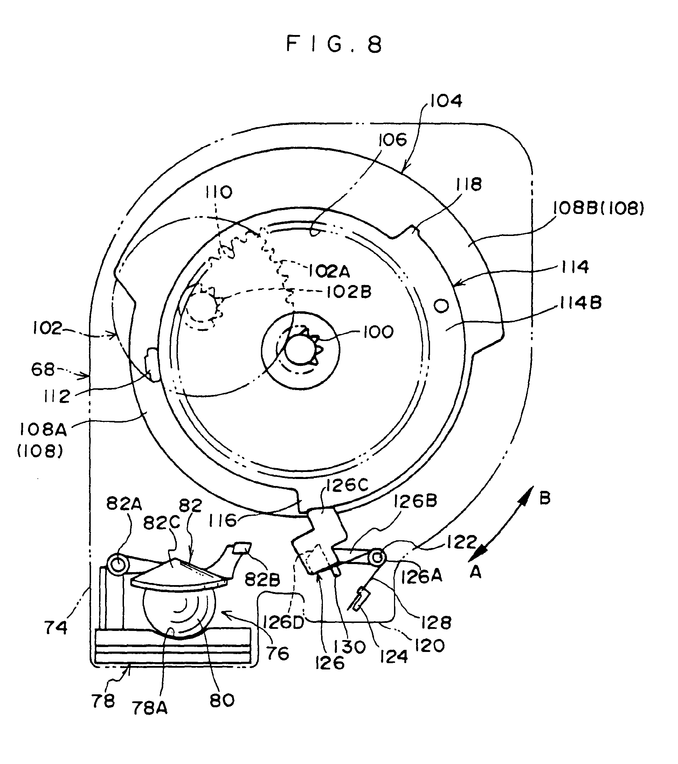

Next, when, from the state shown in Fig. 7, the vehicle occupant pulls the webbing 18 out from the spool 16 in order to apply the webbing 18 to himself/herself, accompanying this action, the pinion 100 rotates in the webbing pull-out rotation direction (direction A). Therefore, the large diameter gear 102A of the two-stage gear 102 meshing with the pinion 100 rotates in a decelerated manner counterclockwise (in the direction of arrow E in Fig. 7), and the small diameter gear 102B as well rotates at the same speed as and in the same direction as the large diameter gear 102A. When the small diameter gear 102B rotates counterclockwise, the inner peripheral gear 110 of the first cam plate 104, which is meshing with the small diameter gear 102B, rotates in the webbing take-up rotation direction (direction B) . In this way, the switching projection 112, which is formed integrally with the first cam plate 104, turns in the direction of arrow F in Fig. 7, and reaches the state shown in Fig. 8. In this state, i.e., in the state in which the webbing is applied to the vehicle occupant, the large diameter portion 108B of the first cam plate 104 is withdrawn from the position directly above the sensor lever 82. Therefore, the V sensor 76 is in an operational state. On the other hand, at that point in time, the second cam plate 114 is not yet rotating. Therefore, the interfering portion 126C of the ALR lever 126 is in a state of riding on the first engaging projection 116, and the non-operating state is maintained. Accordingly, the vehicle occupant can pull-out and take-up the webbing 18 in a predetermined range in accordance with changes in the posture of the vehicle occupant or the like after the vehicle occupant has applied the webbing 18 to himself/herself.

Next, for example, in a case in which a child seat is fixed on a vehicle seat, the webbing retractor 10 is switched from the ELR mode to the ALR mode due to the entire amount of the webbing 18 being pulled out.

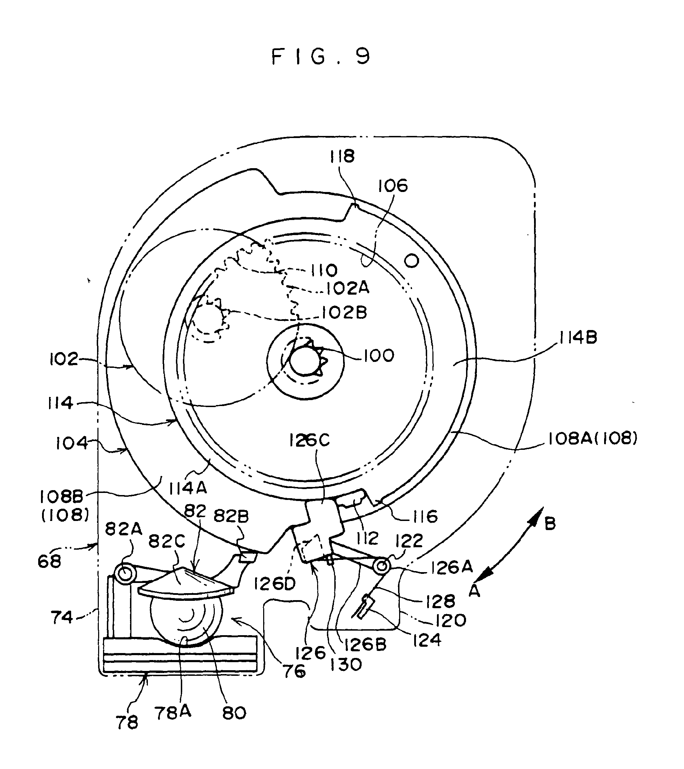

A case in which the state is switched from the state in which the entire amount of the webbing 18 is taken-up as shown in Fig. 7 to the ALR mode will be described hereinafter as an example. When the webbing 18 is pulled-out as described above, accompanying this pulling-out, the switching projection 112 of the first cam plate 104 turns in the webbing take-up rotation direction. Then, when the webbing 18 is pulled-out to near the state in which the entire amount thereof is pulled-out, as shown in Fig. 9, the switching projection 112 abuts the end surface of the first engaging projection 116 of the second cam plate 114. When the webbing 18 is pulled-out further, the second cam plate 114 is pushed by the switching projection 112, and begins to rotate in the webbing take-up rotation direction. Then, the interfering portion 126C of the ALR lever 126 rides up on the switching projection 112 from the first engaging projection 116 of the second cam plate 114. At the point in time when the switching projection 112 crosses over the interfering portion 126C, the interfering portion 126C is abutted by the outer peripheral surface of the small diameter portion 114A of the second cam plate 114 due to the urging force of the torsion coil spring 128. In this way, the claw portion 138A of the ALR lever 126 engages with the external tooth 50 of the V gear 26, and rotation thereof in the webbing pull-out direction is locked. Namely, the ALR is in an operating state. At this time, the large diameter portion 108B of the first cam plate 104 is again positioned directly above the engaging portion 82B of the sensor lever 82 of the V sensor 76. Therefore, the ELR is in a non-operating state. After switching from the ELR to the ALR in this way, if the slack (the excessively pulled-out amount) of the webbing 18 after the child seat or the like has been fixed is taken-up onto the spool 16, the child seat in the above example can be securely fixed to the vehicle seat.

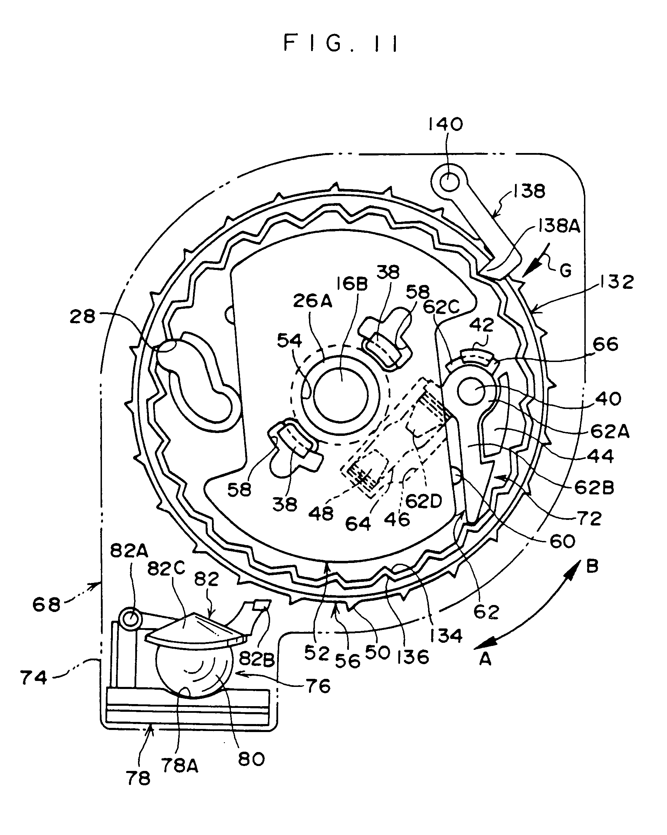

Here, at the usual time when the vehicle occupant has applied the webbing 18 to himself or herself, as shown in Fig. 10, the claw portion 138A of the pawl 138 is engaged with the external tooth 136 of the gear 132 for the WSIR due to the urging force of the urging device, and the state in which webbing pull-out direction rotation of the gear 132 for the WSIR is impeded is maintained. Accordingly, in this state, if the webbing 18 is suddenly pulled-out, the W sensor 72 operates. As shown in Fig. 11, an inertial delay arises at the inertia plate 52, the pawl 62 engages with the internal tooth 134 of the gear 132 for the WSIR, relative rotation arises between the V gear 26 and the spool 16, and the lock plate 24 is engaged with the internal ratchets 14.

Here, when the vehicle occupant cancels the state in which the webbing 18 is applied to him/her and lets go of the webbing 18, the entire amount of the webbing 18 is taken-up onto the spool 16 due to the urging force of the power spring. At this time, at the point in time when the entire amount of the webbing 18 is taken-up, the spool 16 stops rotating in the webbing take-up direction. However, the inertia plate 52, which is disposed coaxially with respect to the V gear 26, is provided so as to be relatively rotatable within a predetermined range. Thus, even after the spool 16 stops rotating in the webbing take-up direction, the inertia plate 52 attempts to rotate in the webbing take-up rotation direction. When this state progresses, the following may occur as shown in Fig. 12: the arm portion 62B of the pawl 62 is pushed by the engaging projection 60 of the inertia plate 52, the pawl 62 swings around the pawl shaft 40 against the urging force of the compression coil spring 64, the distal end portion of the arm portion 62B engages with the internal tooth 134 of the gear 132.

However, in the present embodiment, at the time when the entire amount of the webbing 18 is taken-up, by using the movement of the large diameter portion 108B of the first cam plate 104, the pawl 138 is pushed around the supporting shaft 140 in the direction opposite to the direction of arrow F, and the claw portion 138A of the pawl 138 is moved away from the external teeth 136 of the gear 132 for the WSIR. Accordingly, the gear 132 for the WSIR can rotate in both the webbing take-up rotation direction and the webbing pull-out rotation direction, and is rotated in the direction of application of the load inputted from the distal end portion of the arm portion 62B of the pawl 62. In this way, the engaged state of the distal end portion of the arm portion 62B and the internal tooth 134 of the gear 132 for the WSIR is cancelled. As a result, in accordance with the webbing retractor 10 relating to the present embodiment, the occurrence of so-called end locking at a WSIR can be suppressed or prevented.

Moreover, the webbing retractor 10 relating to the above-described embodiment utilizes a structure which swings the pawl 138 (which is a newly-provided part), by using an existing mechanism for switching between the ELR and the ALR. Thus, the structure can be simplified, and cost reduction can be achieved.

The webbing retractor 10 relating to the present embodiment uses the locking mechanism using the lock plate 24 which is U shaped in plan view. However, the present invention is not limited to the same, and any of various locking mechanisms can be used.

The above-described webbing retractor 10 relating to the present embodiment uses a structure which moves the pawl 138 away from the external teeth 136 of the gear 132 for the WSIR, by using the mechanism for switching between the ELR and the ALR. However, the present invention is not limited to the same. Releasing of the locking of the gear 132 for the WSIR may be carried out by determining that the entire amount of the webbing 18 is taken-up by sensing the wound diameter of the webbing 18 onto the spool 16. Or, instead, releasing of the locking of the gear 132 for the WSIR may be carried out by determining that the entire amount of the webbing 18 is taken-up by sensing the number of rotations of the spool 16.

In addition, the above-described webbing retractor 10 relating to the present embodiment uses a structure in which the internal teeth 134 are formed at the inner peripheral surface of the gear 132 for the WSIR, and the external teeth 136 are formed at the outer peripheral surface of the gear 132 for the WSIR. However, the present invention does not necessarily have to be structured in this way. Any structure may be used provided that it is a structure which fixedly holds the gear 132 for the WSIR at times other than when the entire amount of the webbing 18 is taken-up, and which can set the gear 132 for the WSIR in a rotatable state when the entire amount of the webbing 18 is taken-up.

As described above, in the webbing retractor relating to the present invention, the engagement teeth are provided so as to be rotatable around the axis with respect to the frame, and a holding device for holding the engagement teeth is provided. When the vehicle occupant cancels the state in which the webbing is applied to himself/herself and the entire amount of the webbing is taken-up on the take-up shaft due to urging force, the holding device holds the engagement teeth in a rotatable state. At other times, the holding device holds the engagement teeth in a state in which rotation thereof in the webbing pull-out direction is impeded. Suppression or prevention of so-called end locking in a WSIR is thereby achieved.

## Claims

1. A webbing retractor in which, when a webbing for restraining a vehicle occupant is suddenly pulled-out, an inertia plate provided integrally and coaxially at an axial end side of a take-up shaft, which is supported so as to be rotatable around an axis at a frame fixed to a vehicle body and which takes-up the webbing in layers by urging force, causes a rotation delay with respect to the take-up shaft, and causes a swingably-supported pawl to swing and causes the pawl to engage with engagement teeth fixedly supported at the frame, thereby locking rotation of the take-up shaft in a webbing pull-out direction,
wherein the engagement teeth are provided so as to be rotatable around an axis with respect to the frame, and the webbing retractor comprises a holding device which, when a vehicle occupant cancels an applied state of the webbing and an entire amount of the webbing is taken-up onto the take-up shaft by urging force, holds the engagement teeth in a rotatable state, and which, at other times, holds the engagement teeth in a state in which rotation of the engagement teeth in the webbing pull-out direction is impeded.

2. The webbing retractor of claim 1, wherein the holding device comprises a pawl controllable by a cam mechanism.

3. The webbing retractor of claim 1, wherein impeding of rotation of the engagement teeth can be cancelled by determining that the webbing is in a state in which the entire amount of the webbing is taken-up by sensing a wound diameter of the webbing on the take-up shaft.

4. The webbing retractor of claim 1, wherein impeding of rotation of the engagement teeth can be cancelled by determining that the webbing is in a state in which the entire amount of the webbing is taken-up by sensing a number of times of rotation of the take-up shaft.

5. A webbing retractor comprising:
a take-up shaft taking-up, in layers and by urging force, a webbing for restraining a vehicle occupant;
a frame fixed to a vehicle body and rotatably supporting both end portions of the take-up shaft, and lock teeth are formed at a surface of the frame which surface intersects an end portion of the take-up shaft;
a lock plate provided at at least one end portion side of the take-up shaft, and able to move between a position of engagement with the lock teeth and a position of non-engagement with the lock teeth, the lock plate impeding rotation of the take-up shaft in a webbing pull-out direction by engaging with the lock teeth;
a lock wheel provided coaxially at one end portion side of the take-up shaft, and the lock wheel usually rotates integrally with the take-up shaft and holds the lock plate at the position of non-engagement, and when relative rotation arises between the take-up shaft and the lock wheel, the lock wheel moves the lock plate to the position of engagement;
a pawl swingably supported at the lock wheel, and usually held at a non-swung position by urging force;
an inertia plate disposed coaxially to the lock wheel and provided so as to be able to rotate relatively within a predetermined range, and the inertia plate usually rotates integrally with the lock wheel, and when the webbing is suddenly pulled-out, the inertia plate causes a rotation delay with respect to the take-up shaft, and moves the pawl from the non-swung position to a swung position against urging force;
an engaging member disposed coaxially to the lock wheel and provided so as to be able to rotate around an axis, and engagement teeth are formed at the engaging member at a peripheral surface side thereof opposing the pawl, and the engagement teeth engage with the pawl and stop rotation of the lock wheel in the webbing pull-out direction due to the pawl moving to the swung position; and
a holding device which, when a vehicle occupant cancels an applied state of the webbing and an entire amount of the webbing is taken-up onto the take-up shaft by urging force, holds the engaging member in a rotatable state, and which, at other times, holds the engaging member in a state in which rotation of the engaging member in the webbing pull-out direction is impeded.

6. The webbing retractor of claim 5, wherein the lock wheel is shaped as a disc having an outer diameter which is larger than an outer diameter of an end portion of the take-up shaft.

7. The webbing retractor of claim 5, wherein the engaging member is a gear, and the gear is disposed at an outer periphery of the inertia plate, and external teeth, which are a portion of the holding device, are formed at an outer peripheral surface of the gear.

8. The webbing retractor of claim 6, wherein the take-up shaft has a rotating shaft, and the lock wheel has an axially central portion, and a cylindrical boss is formed at the axially central portion, and the boss has a pair of claws at an inner peripheral surface of the boss, and due to the rotating shaft being inserted in the boss, the lock wheel is mounted freely rotatably to and coaxially with one axial direction end portion of the take-up shaft.

9. The webbing retractor of claim 7, wherein the pawl is one portion of the holding device, and the pawl has a supporting shaft and a claw portion and is supported so as to be swingable around the supporting shaft at an outer side of the gear.

10. The webbing retractor of claim 9, wherein claw portion of the pawl can engage with the external teeth of the gear, and when the claw portion engages with the external teeth, rotation of the gear in one direction is impeded and the gear can be held.

11. The webbing retractor of claim 9, wherein when the entire amount of the webbing is taken-up, the pawl can swing in a direction of moving away from the external teeth.

12. The webbing retractor of claim 9, wherein the holding device comprises a pawl controllable by a cam mechanism.

13. The webbing retractor of claim 9, wherein locking of the gear can be cancelled by determining that the webbing is in a state in which the entire amount of the webbing is taken-up by sensing a wound diameter of the webbing on the take-up shaft.

14. The webbing retractor of claim 9, wherein locking of the gear can be cancelled by determining that the webbing is in a state in which the entire amount of the webbing is taken-up by sensing a number of times of rotation of the take-up shaft.

15. A method used in a webbing retractor, the method comprising:
holding an engaging member rotatably when a vehicle occupant cancels an applied state of a webbing for restraining a vehicle occupant and an entire amount of the webbing is taken-up onto a take-up shaft by urging force; and
at other times, holding the engaging member in a state in which rotation of the engaging member in a direction of pulling-out the webbing is impeded.

16. The method of claim 15, further comprising the step of canceling impeding of rotation of the engaging member by determining that the webbing is in a state in which the entire amount of the webbing is taken-up by sensing a wound diameter of the webbing on the take-up shaft.

17. The method of claim 15, further comprising the step of canceling impeding of rotation of the engaging member by determining that the webbing is in a state in which the entire amount of the webbing is taken-up by sensing a number of times of rotation of the take-up shaft.

18. The method of claim 15, further comprising the step of controlling the holding of the engaging member by a cam mechanism.
